# EUROPÄISCHE PATENTSCHRIFT

(11) **EP 0 981 449 B1**
(45) Veröffentlichungstag und Bekanntmachung des Hinweises auf die Patenterteilung: **07.11.2001**
(21) Anmeldenummer: 98924254.0
(22) Anmeldetag: 30.04.1998
(51) Int. Cl.: B41M 5/00, B41M 1/30, C08J 7/04, G03G 7/00, H05K 9/00, E06B 5/12

(54) **LEITFÄHIGE BEDRUCKTE BAHNEN AUS KUNSTSTOFF**
CONDUCTIVE PRINTED PLASTIC STRIPS
BANDES IMPRIMEES CONDUCTRICES EN MATIERE PLASTIQUE

(30) Priorität: 03.05.1997 DE 19718859
(43) Veröffentlichungstag der Anmeldung: 01.03.2000
(73) Patentinhaber: Technoplast Beschichtungsgesellschaft MBH, 50670 Köln (DE)
(72) Erfinder: SCHLEUSSNER, Martin, D-50767 Köln (DE)
(74) Vertreter: Meyers, Hans-Wilhelm, Dr.Dipl.-Chem.
(86) Internationale Anmeldenummer: EP9802564
(87) Internationale Veröffentlichungsnummer: WO9850238

(56) Entgegenhaltungen:
- EP-A- 0 402 260
- EP-A- 0 409 515
- EP-A- 0 454 428
- US-A- 5 310 640
- DEFIEUW G ET AL: "THERMAL DYE SUBLIMATION TRANSFER" RESEARCH DISCLOSURE, Nr. 334, 1. Februar 1992, Seiten 155-159, XP000291266 EMSWORTH, GB

## Beschreibung

Gegenstand der vorliegenden Erfindung sind leitfähige, bedruckbare Bahnen aus Kunststoff, Verfahren zur Herstellung leitfähiger, bedruckbarer Bahnen aus Kunststoff sowie ein Bindemittel, mit dem leitfähige organische Polymere auf Kunststoffolien aufgetragen werden können.

Aus Gründen des Explosionsschutzes und der elektromagnetischen Abschirmung sowie des erhöhten Bedarfs an Elektrolumineszenzanzeigen, LCDs und Touch Screens gewinnen leitfähige Oberflächen zunehmend an Bedeutung, da mit ihnen elektrostatische Aufladungen verhindert werden können. Dabei gilt das Interesse vermehrt leitfähigen Kunststoffoberflächen.

Ein lichtempfindliches elektrofotografisches Material, das ein leitfähiges Substrat, eine Zwischenschicht aus Polyisocyanat, und eine lichtempfindliche Schicht umfaßt, ist aus der EP-A-402 260 bekannt.

Die üblicherweise verwendeten Kunststoffe weisen einen hohen Widerstand auf, der im Bereich von 10¹⁵ Ohm/□ liegen kann. Um die Leitfähigkeit von Kunststoffen, insbesondere von Kunststofffolien zu erhöhen, werden Metallsiebdruckfarben, Carbonlacke oder Metallnetze eingesetzt. Werden jedoch transparente Oberflächen benötigt, ist dies nicht möglich, da die Oberfläche im Endeffekt nicht mehr transparent wäre.

Zur Herstellung von transparenten, leitfähigen Oberflächen werden daher Kunststoffolien in einem aufwendigen Prozeß im Ultrahochvakuum mit Metalloxidschichten gesputtert. Üblicherweise wird hierzu Indium-Zinnoxid (ITO) verwendet.

Diese gesputterten Schichten können jedoch nicht mehr nachträglich bedruckt werden, da die Druckfarben nicht mehr zufriedenstellend auf der Metalloxidschicht haften. Sollen jedoch bereits bedruckte Schichten gesputtert werden, besteht die Gefahr der Ausgasung von flüchtigen Komponenten der Druckfarben in dem für das Sputtering notwendigen Ultrahochvakuum.

Sputtering-Verfahren sind durch die Verwendung von Ultrahochvakuum sehr aufwendig. Weiterhin zeigen gesputterte Schichten eine Veränderung des Widerstandes bei der mechanischen und/oder thermischen Verformung der Oberfläche.

Die Verwendung der Schwermetalloxide in gesputterten Schichten birgt sowohl in der Produktion als auch in der Anwendung Gefahren für Mensch und Umwelt.

Das der Erfindung zugrundeliegende technische Problem besteht in der Bereitstellung von leitfähigen Kunststoffoberflächen, die besonders gut haftend bedruckbar sind und verbesserte Oberflächeneigenschaften aufweisen sowie Verfahren zur Herstellung dieser Kunststoffoberflächen, die auf den Einsatz von Ultrahochvakuum und Schwermetallen verzichten.

Überraschenderweise wird das erfindungsgemäße Problem gelöst durch leitfähige bedruckbare Bahnen aus Kunststoff mit den Merkmalen des Anspruchs 1, mit bevorzugten Ausführungsformen gemäß den Ansprüchen 2 bis 6, leitfähige bedruckte Bahnen gemäß Anspruch 7, ein Verfahren zur Herstellung gemäß Anspruch 9 sowie die Verwendung der leitfähigen bedruckbaren Bahnen aus Kunststoff gemäß Anspruch 14. Die Ansprüche 10 bis 13 stellen bevorzugte Ausführungsformen des Verfahrens dar.

Die erfindungsgemäßen leitfähigen bedruckbaren Bahnen aus Kunststoff weisen eine obere und eine untere Seite auf, wobei mindestens eine der Seiten mit einer Primerschicht für die Druckvorbehandlung versehen ist, umfassend eine Substanz ausgewählt aus der Gruppe bestehend aus Polyurethan, Acrylaten, Polyesterharzen mit Isocyanaten oder Kombinationen davon, auf die eine ein leitfähiges organisches Polymer enthaltende, weitere Schicht aufgetragen ist.

Diese Kunststoffbahnen sind insbesondere dann vorteilhaft, wenn aus Gründen des Explosionsschutzes oder der elektromagnetischen Abschirmung oder zur Bedruckung mit Elektrolumineszenzpasten eine leitfähige Oberfläche benötigt wird. Darüber hinaus zeigen diese Kunststoffolien keine signifikante Veränderung des spezifischen Widerstandes bei Verformung.

Bevorzugterweise bestehen die Kunststoffbahnen aus Polyethylen, Polycarbonat, Polyacrylat, Polyester, Polypropylen, Polyvinylchlorid oder Copolymeren davon.

Die Primerschicht für die leitfähigen, bedruckbaren Bahnen aus Kunststoff werden von einem Primer gebildet, der aus Polyurethanen, Acrylaten, Polyesterharzen mit Isocyanaten besteht. Besonders geeignete Bestandteile des Primers sind Acrylat-Copolymere der Neocryl-Reihe der Firma Polyvinyl-Chemie Holland N.V. (Neocryl XK90, XK11, BT26, A-1052), Halloflex 202 erhältlich von ICI (Vinylacrylat-Copolymer), Neopac E-130 (Polyurethan-Acryl-Copolymer), Viclan VL805 (PVDC), Dynapol L206 (Polyester), Elecond PQ50B (Acrylat), Alberdingk APU1060 und U910 (Polyethylen-Polyurethan-Copolymere), Saran F-310 (PVDC), Alberdingk APU1014, Aquacote 287/4 (Styrolacrylat), Neorez R-970, R-973, R-974, R-986, R-940, R-972 gegebenenfalls zusammen mit Xama (Tris-(N-aceridinyl)ethan), Poly(oxy-p-phenylensulfonyl-p-phenylen) der PES-Reihe erhältlich von der Deutschen ICI GmbH (PES 2000, PES 124G, PES 124S, PES 215G), Vylon 103, Vylon 240, Pioloform BL 18, PolyDisB/300LF, Plexigum M890, Vital PE-2200, Ucar Vinyl VMCH, Melinex 525, NeocXK11, NeocA1052, Cariflex TR1102, Clarene R-20 und Clarene L-6. Die Primerschicht dient der Druckvorbehandlung und vermittelt die Haftung der durch unterschiedliche Druckverfahren aufbringbaren Farben, Lacke, Pasten oder ähnlichem, die sonst eventuell keine ausreichende Haftung besonders bei Verformung auf den Kunststoffbahnen aufweisen würden.

Gute Haftung bedeutet in diesem Zusammenhang, daß die erfindungsgemäßen bedruckten leitfähigen Bahnen aus Kunststoff in der Gitterschnittprüfung gemäß DIN 53 151 oder ASTM D 3002 bzw. ASTM D 3359 einen GT-Wert zwischen 0 und 3, bevorzugt zwischen 0 und 2, und insbesondere zwischen 0 und 1 aufweisen.

Der GT-Wert gibt dabei an, wie gut eine Bedruckung oder Ähnliches auf der Oberfläche haftet. GT-Werte sind ein Maß für die Haftung der Bedruckung auf der Oberfläche und reichen von 0 bis 5. Ein Wert von 5 bedeutet, daß im Rahmen der Prüfung eine fast vollständige Entfernung der Bedruckung erfolgt, wohingegen ein GT-Wert von 0 bedeutet, daß keine Bedrukkung entfernt wurde. Niedrige GT-Werte bedeuten also eine gute Haftung der Bedruckung auf der Oberfläche.

Als leitfähiges organisches Polymer werden insbesondere Polyamidine, Polyacetylene, Polypyrrole, Polythiophene, Radikale enthaltende Salze und Kombinationen davon verwendet. Geeignete Materialien sind N-n-Propyl-i-chinolinium erhältlich als OS-CON der Firma Sanyo (Japan), Polyaniline erhältlich unter dem Namen Incoblend von der Firma Zipperling-Kessler (Deutschland), Polythiophene erhältlich unter dem Handelsnamen Hostaphan RN 12 von Hoechst (Deutschland), Polyaniline erhältlich unter dem Namen CP EX-1 erhältlich von Hexcel (USA) sowie die unter dem Namen TEC erhältlichen Produkte der Firma Ciba-Geigy (Schweiz) .

Radikale enthaltende Salze bezeichnet insbesondere solche Verbindung, bei dem ein Kunststoff durch Dotierung beispielsweise mit Br₂ oder I₂ in einen radikalischen Zustand überführt wird.

Die das leitfähige organische Polymer enthaltende Schicht enthält gegebenenfalls ein Bindemittel, wodurch die Haftung an der Primerschicht verbessert werden kann. Insbesondere kann das Verhältnis von leitfähigem organischen Polymer und Bindemittel so variiert werden, daß neben sehr kleinen Widerständen auch Widerstände im Bereich von 10⁶ Ohm/□ erreicht werden können, die antistatische Eigenschaften aufweisen.

Vorteilhaft ist die Verwendung von transparenten Polymeren, da somit mechanisch und thermisch verformbare, transparente, bedruckbare, leitfähige Kunststoffbahnen erhalten werden, die so bisher nicht zur Verfügung standen.

Insbesondere vorteilhaft ist die Verwendung der erfindungsgemäßen Kunststoffbahn in den Bereichen, in denen eine Transparenz der Kunststoffoberfläche notwendig ist, beispielsweise als Anzeige in elektronischen Geräten.

Diese bedruckbaren Bahnen aus Kunststoff lassen sich z.B. mit Druckfarben, Lacken, Hartlacken, mit elektrolumineszierenden Siebdruckpasten, mit Flüssigkristallen bedrucken oder beschichten. Darüber hinaus kann die Bedruckung und/oder Beschichtung unabhängig davon, ob die das leitfähige organische Polymer enthaltende Schicht einseitig oder beidseitig aufgetragen wird, beidseitig erfolgen.

Als Bindemittel zum Auftragen des leitfähigen organischen Polymers eignen sich insbesondere Kunstharze oder kunstharzähnliche Substanzen, wie Polyvinylchloridlatices, Polymethylmethacrylatlatices, Polyurethandispersion, Polyvinylacetat oder Polyvinylalkohol.

Das erfindungsgemäße Verfahren zur Herstellung von leitfähigen, bedruckbaren Bahnen aus Kunststoff beinhaltet die Auftragung eines Primers zur Ausbildung einer Primerschicht für die Druckvorbehandlung sowie das Aufbringen einer weiteren Schicht enthaltend ein leitfähiges, organisches Polymer.

Das Verfahren zeichnet sich insbesondere durch die Auftragung der leitenden Beschichtung unter Normaldruck sowie durch die Vermeidung von Schwermetallen aus.

Insbesondere geeignet sind Verfahren, in der die die Primerschicht bildenden Primer durch Beschichtungstechniken wie Reverse-Roll, Rakelverfahren oder Rasterwalzenauftrag aufgetragen werden.

Zur Auftragung des leitfähigen organischen Polymers sind insbesondere wäßrige oder organische Lösungen oder Mischungen davon geeignet, wobei als Lösungsmittel für die Lösung insbesondere Alkohole, Ketone, Heterocyclen oder Kombinationen davon geeignet sind. Gegebenenfalls wird das Polymer zusammen mit einem Bindemittel aufgetragen.

Der Aufbau der erfindungsgemäßen Kunststoffbahn sowie ihre Herstellung sind in den folgenden Beispielen erläutert.

### Beispiel 1

Eine biaxial gereckte Polyesterfolie vom Typ Mylar A (DuPont) wird mit einem in Aceton verdünnten Acrylatprimer im Reverse-Roll-Verfahren beschichtet. Die anschließende Trocknung erfolgt bei 100°C, einer Bahngeschwindigkeit von 3 m/min und einer Trocknerlänge von 4 m. Auf die so entstandene Primerschicht wird ebenfalls im Reverse-Roll-Verfahren eine wäßrige Lösung mit 180 g Baytron P (1,3 % Polyethylendioxythiophenpolystyrolsulfonat), 15,4 g Impranil 85 UD, 6,5 g N-Methylpyrrolidon, 39,0 g Isopropanol, 2,1 g Epoxysilan A 187, 16 g Sorbit (30 %ig in H₂O) aufgetragen. Die Trocknung erfolgt bei 115°C in einem Trockner mit einer Länge von 4 m bei einer Geschwindigkeit von 5 m/min. Anschließend erfolgt eine Schutzbedruckung auf Polyacrylatbasis unter UV-Bestrahlung von 800 mJ/cm² im Siebdruckverfahren (100er T-Sieb).

### Beispiel 2

Lösungsmittelhaltige oder wäßrige Formulierungen, die leitfähige organische Polymere enthalten, werden mittels eines Rakelverfahrens mit anschließendem Mehrwalzentrocknungsverfahren auf 250 µ Polycarbonatfolie (Lexan) beschichtet.

Das Rakelbeschichtungsverfahren zeichnet sich durch ein Anspülen von Beschichtungslösung im Überschuß aus, die durch einen 50er Drahtrakel auf die vorgesehene Auftragsmenge dosiert wird.

Die Beschichtungsgeschwindigkeit beträgt 10 m/min.

In einem anschließenden Mehrzonentrockenprozeß wird im ersten Trockensegment (2 m Länge) bei einer Temperatur von 120°C, im zweiten Trockensegment von 130°C, die leitende Polymerschicht getrocknet (2 m Länge, 10 m/min). Die so erhaltene Folie (Widerstand 104 - 105 Ω/□) wird mit Marastar Farbe (Marabu) bedruckt.

### Beispiel 3

Ein leitfähiges, organisches Polymer enthaltende Schicht mit ca. 3000 Ω/□ Widerstand ist gut haftend mit PET verbunden und ist mit lösungsmittelhaltigen Siebdruckverfahren bedruckbar. Der Aufbau für Elektrolumineszenz stellt sich wie folgt dar.
1. Basisträger (PET Mylar, Melinex oder Polycarbonat (Lexan, 250 µl)
2. Leitende Schicht (analog Beispiel 1 bzw. 2)
3. Elektrolumineszenz-Schicht (z.B. 7151 E, Fa. Dupont) Trocknung bei 120°C (Luftrocknung, 5 Min im Ofen)
4. 2. Isolierlackschicht (z.B. 7153 E, Fa. Dupont) Trocknung bei 120°C (Lufttrocknung)
5. Silberleitlack (z.B. 7145 L, Fa. Dupon) Trocknung bei 120°C (Luftrocknung im Ofen)

Kontaktierung nach Trocknung, Trocknung 110 V, 400 Hz.

### Beispiel 4

Eine 3000 Ω/□ Folie, wie in Beispiel 3 hergestellt, wurde bedruckt mit Dupont-Pasten gemäß Vorschrift (Luxprint), ebenfalls, 4 mm tief geprägt, positives Werkzeug 70°C, negatives Werkzeug Raumtemperatur (25°C).

Eine Polyesterfolie mit ITO-gesputtert (100 Ω/□) wurde den gleichen Bedruckungs- als auch Prägungsprozeduren unterworfen. Beide wurden einer Hubprüfung (Böck Prüfgerät, 5 Newton Tastfinger) unterzogen. Bei der ITO-Folie trat ein Bruch nach ca. 100 Hüben ein (Verdunklung der EL-Lampe über der Prägung). Die erfindungsgemäße 3000 Ω/□ Folie zeigte nach 1,7 Mio. Hüben noch eine vollständig Leuchtkraft.

### Beispiel 5

Eine Polyesterfolie (Mylar D, 175 µ) wurde gemäß oben genannter Rezeptur mit einem Leitpolymer beschichtet. Ebenfalls wurde ein Mylar D, 175 µ mit oben genannten Primer behandelt und anschließend unter gleichen Bedingungen wie der unbehandelte Mylar D Träger mit einer leitenden Rezeptur versehen. Beide Proben wurden mit einer Siebdruckfarbe der Firma Marabu, Marastar SR (100er T-Sieb, Trocknung 2 min bei 70°C) bedruckt. Anschließend erfolgte eine Gitterschnittprüfung gemäß DIN 53 151 bzw. ASTM D 3002. Die Bedruckung des nur mit Leitpolymer behandelten Polyesters ergab einen Gitterschnitt von 4 bis 5 (fast vollständiges Ausbrechen), während durch die zusätzliche Primerbeschichtung gute bis sehr gute Haftwerte (GT 0 bis 1) erreicht wurden.

## Patentansprüche

1. Leitfähige bedruckbare Bahnen aus Kunststoff mit einer oberen und einer unteren Seite, wobei mindestens eine der Seiten mit einer Primerschicht für die Druckvorbehandlung versehen ist, umfassend eine Substanz ausgewählt aus der Gruppe bestehend aus Polyurethanen, Acrylaten, Polyesterharzen mit Isocyanaten oder Kombinationen davon, auf die eine ein leitfähiges organisches Polymer enthaltende, weitere Schicht aufgetragen ist.

2. Leitfähige bedruckbare Bahnen aus Kunststoff gemäß Anspruch 1, **dadurch gekennzeichnet, daß** die Bahnen aus Polyethylen, Polycarbonat, Polyacrylat, Polyester, Polypropylen, PVC oder Copolymeren davon bestehen.

3. Leitfähige bedruckbare Bahnen aus Kunststoff gemäß mindestens einem der Ansprüche 1 bis 2, **dadurch gekennzeichnet, daß** das leitfähige organische Polymere aus der Gruppe Polyacetylene, Polypyrrole, Polythiophene, Radikale enthaltende Salze und Kombinationen davon gewählt wird.

4. Leitfähige bedruckbare Bahnen aus Kunststoff gemäß mindestens einem der Ansprüche 1 bis 3, **dadurch gekennzeichnet, daß** die das leitfähige organische Polymere enthaltende Schicht zusätzlich ein Bindemittel enthält.

5. Leitfähige bedruckbare Bahnen aus Kunststoff gemäß mindestens einem der Ansprüche 1 bis 4, **dadurch gekennzeichnet, daß** das leitfähige organische Polymer, das Bindemittel und/oder die Primerschicht transparent sind.

6. Leitfähige bedruckbare Bahnen aus Kunststoff gemäß mindestens einem der Ansprüche 1 bis 5, **dadurch gekennzeichnet, daß** sie mit Siebdruckfarben, Lacken, Lumineszenzpasten, Flüssigkristalle oder Hartlacke bedruckt oder beschichtet werden können.

7. Leitfähige bedruckte Bahnen aus Kunststoff erhältlich durch Bedrucken einer leitfähigen bedruckbaren Bahn aus Kunststoff gemäß mindestens einem der Ansprüche 1 bis 6 mit Farben, Lacken und/oder Pasten.

8. Leitfähige bedruckte Bahnen gemäß Anspruch 7, **dadurch gekennzeichnet, daß** die Bahnen einen Gitterschnittwert gemäß DIN 53 151 bzw. ASTM D 3002 von 0 bis 3 aufweist.

9. Verfahren zur Herstellung von leitfähigen bedruckbaren Bahnen aus Kunststoff gemäß mindestens einem der Ansprüche 1 bis 7, in dem auf eine Kunststoffbahn mindestens einseitig ein Primer aufgetragen wird und auf diese Primerschicht für die Druckvorbehandlung eine weitere Schicht, enthaltend ein leitfähiges organisches Polymer aufgetragen wird.

10. Verfahren gemäß Anspruch 9, **dadurch gekennzeichnet, daß** der die Primerschicht bildende Primer durch Beschichtungstechniken wie Reverse roll, Rakelverfahren oder Rasterwalzenauftrag aufgetragen wird.

11. Verfahren gemäß mindestens einem der Ansprüche 9 und/oder 10, **dadurch gekennzeichnet, daß** das leitfähige organische Polymer in wäßriger oder organischer Lösung oder Mischungen davon aufgetragen wird.

12. Verfahren gemäß Anspruch 11, **dadurch gekennzeichnet, daß** das in der Lösung des leitfähigen organischen Polymers enthaltene Lösungsmittel aus der Gruppe Alkohole, Ketone und Heterozyklen und Kombinationen davon gewählt wird.

13. Verfahren gemäß mindestens einem der Ansprüche 9 bis 12, **dadurch gekennzeichnet, daß** das leitfähige organische Polymer zusammen mit einem Bindemittel aufgetragen wird.

14. Verwendung von leitfähigen, bedruckbaren Bahnen aus Kunststoff gemäß einem der Ansprüche 1 bis 7 zur Bedruckung.

## Claims

1. Conductive printable sheets of plastic having upper and lower sides, wherein at least one of the sides is provided with a primer layer for printing pretreatment, comprising a substance selected from the group consisting of polyurethanes, acrylates, polyester resins with isocyanates, or combinations thereof, onto which another layer containing a conductive organic polymer has been coated.

2. The conductive printable sheets of plastic according to claim 1, characterized in that said sheets consist of polyethylene, polycarbonate, polyacrylate, polyester, polypropylene, PVC or copolymers thereof.

3. The conductive printable sheets of plastic according to at least one of claims 1 to 2, **characterized in that** said conductive organic polymer is selected from the group of polyacetylenes, polypyrroles, polythiophenes, salts containing free radicals, and combinations thereof.

4. The conductive printable sheets of plastic according to at least one of claims 1 to 3, **characterized in that** said layer containing the conductive organic polymer additionally contains a binder.

5. The conductive printable sheets of plastic according to at least one of claims 1 to 4, **characterized in that** said conductive organic polymer, said binder and/or said primer layer are transparent.

6. The conductive printable sheets of plastic according to at least one of claims 1 to 5, **characterized in that** they can be printed or coated with screen printing inks, paints, luminescent pastes, liquid crystals or hard lacquers.

7. Conductive printed sheets of plastic obtainable by printing a conductive printable sheet of plastic according to at least one of claims 1 to 6 with inks, paints and/or pastes.

8. The conductive printed sheets according to claim 7, **characterized in that** said sheets exhibit a cross-hatch adhesion value according to DIN 53 151 or ASTM D 3002 of from 0 to 3.

9. A process for preparing conductive printable sheets of plastic according to at least one of claims 1 to 7 by coating a primer onto at least one side of a plastic sheet and coating another layer containing a conductive organic polymer onto this primer layer for printing pretreatment.

10. The process according to claim 9, **characterized in that** said primer forming the primer layer is coated by coating techniques such as reverse roll, knife-coating or gravure coating.

11. The process according to at least one of claims 9 and/or 10, **characterized in that** said conductive organic polymer is coated from an aqueous or organic solution or mixtures thereof.

12. The process according to claim 11, **characterized in that** the solvent contained in said solution of the conductive organic polymer is selected from the group of alcohols, ketones and heterocycles, and combinations thereof.

13. The process according to at least one of claims 9 to 12, **characterized in that** said conductive organic polymer is coated together with a binder.

14. Use of conductive printable sheets of plastic according to any of claims 1 to 7 for printing.

## Revendications

1. Bandes imprimables conductrices en un matériau plastique, ayant une face supérieure et une face inférieure, où au moins l'une des faces est pourvue d'une couche primaire pour traitement préalable à l'impression, comportant une substance choisie dans l'ensemble comprenant les polyuréthannes, les acrylates, les résines de polyester avec des isocyanates, ou leurs combinaisons, sur laquelle est appliquée une autre couche, contenant un polymère organique conducteur.

2. Bandes imprimables conductrices en un matériau plastique selon la revendication 1, **caractérisées en ce que** les bandes sont constituées de polyéthylène, de polycarbonate, de polyacrylate, de polyester, de polypropylène, de PVC ou de copolymères de ceux-ci.

3. Bandes imprimables conductrices en un matériau. plastique selon au moins l'une des revendications 1 à 2, **caractérisées en ce que** le polymère organique conducteur est choisi dans l'ensemble comprenant les polyacétylènes, les polypyrroles, les polythiophènes, les sels contenant des radicaux, et les combinaisons de ceux-ci.

4. Bandes imprimables conductrices en un matériau plastique selon au moins l'une des revendications 1 à 3, **caractérisées en ce que** la couche contenant le polymère organique conducteur contient en outre un liant.

5. Bandes imprimables conductrices en un matériau plastique selon au moins l'une des revendications 1 à 4, **caractérisées en ce que** le polymère organique conducteur, le liant et/ou la couche primaire, sont transparents.

6. Bandes imprimables conductrices en un matériau plastique selon au moins l'une des revendications 1 à 5, **caractérisées en ce qu'**elles peuvent recevoir par impression ou enduction des encres pour sérigraphie, des vernis, des pâtes luminescentes, des cristaux liquides ou des vernis à base de résine.

7. Bandes imprimées conductrices en un matériau plastique pouvant être obtenues par impression d'une bande imprimable conductrice en un matériau plastique selon au moins l'une des revendications 1 à 6 avec des peintures, des vernis et/ou des pâtes.

8. Bandes imprimées conductrices selon la revendication 7, **caractérisées en ce que** les bandes ont un coefficient de quadrillage, mesuré selon DIN 53 151 ou ASTM D 3002, de 0 à 3.

9. Procédé de fabrication de bandes imprimables conductrices en un matériau plastique selon au moins l'une des revendications 1 à 7, dans lequel, sur une bande en un matériau plastique, on applique sur au moins une face un primaire, et on applique sur cette couche primaire, pour le traitement préalable à l'impression, une autre couche contenant un polymère organique conducteur.

10. Procédé selon la revendication 9, **caractérisé en ce que** le primaire formant la couche primaire est appliqué par des techniques d'enduction telles que les cylindres inversés, le procédé à la racle ou le procédé d'application au cylindre tramé.

11. Procédé selon au moins l'une des revendications 9 et/ou 10, **caractérisé en ce que** le polymère organique conducteur est appliqué dans une solution aqueuse ou organique ou des mélanges de celles-ci.

12. Procédé selon la revendication 11, **caractérisé en ce que** le solvant contenu dans la solution du polymère organique conducteur est choisi dans l'ensemble comprenant les alcools, les cétones et les composés hétérocycliques, et les combinaisons de ceux-ci.

13. Procédé selon au moins l'une des revendications 9 à 12, **caractérisé en ce que** le polymère organique conducteur est appliqué en même temps qu'un liant.

14. Utilisation de bandes imprimables conductrices en un matériau plastique selon l'une des revendications 1 à 7, pour l'impression.
